# FASCICULE DE BREVET EUROPEEN

(11) **EP 2 170 647 B1**
(45) Date de publication et mention de la délivrance du brevet: **03.12.2014**
(21) Numéro de dépôt: 08831400.0
(22) Date de dépôt: 17.07.2008
(51) Int. Cl.: B60N 2/48, C25D 7/00

(54) **TIGE METALLIQUE DE MONTAGE D'UN APPUI-TETE REVETUE D'UNE COUCHE D'ETAIN**
METALLSTIFT ZUR ANBRINGUNG EINER KOPFSTÜTZE MIT ZINNBESCHICHTUNG
METAL PIN FOR ASSEMBLY OF A HEADREST WITH A TIN COATING

(30) Priorité: 25.07.2007 FR 0705442
(43) Date de publication de la demande: 07.04.2010
(73) Titulaire: Centre d'étude et de recherche pour l'automobile (CERA), 51100 Reims (FR)
(72) Inventeur: BONFILS, Xavier, 51100 Reims (FR)
(74) Mandataire: Sayettat, Julien Christian
(86) Numéro de dépôt international: PCT/FR2008/001055
(87) Numéro de publication internationale: WO 2009/037392

(56) Documents cités:
- EP-A- 1 297 997
- JP-A- 2006 082 793
- US-A1- 2006 236 520

## Description

L'invention concerne une tige métallique de montage d'un appui-tête sur un dossier de siège de véhicule automobile, un dispositif de montage et de blocage en coulissement d'une telle tige, une armature d'appui-tête comprenant au moins une telle tige, un appui-tête de siège de véhicule automobile comprenant une telle armature et un siège de véhicule automobile comprenant au moins une telle tige.

Il est connu, par exemple du document US2006/0236520, de réaliser une tige métallique de montage d'un appui-tête sur un dossier de siège de véhicule automobile, ladite tige étant revêtue, au moins en partie, d'une couche de nickel d'apprêt et d'une couche de revêtement en chrome, ceci notamment à des fins esthétiques.

Cependant, un tel agencement présente divers inconvénients. Le dépôt d'une couche de nickel d'apprêt complexifie la réalisation et engendre des surcoûts importants, ceci d'autant plus que le nickel est un métal onéreux. De plus, le chrome est un métal que l'on cherche à éradiquer des véhicules automobile pour des raisons environnementales.

L'invention a pour but de proposer un agencement moins coûteux, respectueux de l'environnement et d'esthétique analogue à celle obtenue avec des revêtements en chrome.

A cet effet, et selon un premier aspect, l'invention propose une tige métallique de montage d'un appui-tête sur un dossier de siège de véhicule automobile, ladite tige étant revêtue, au moins en partie, d'une couche de revêtement métallique déposée par électrolyse d'une solution d'étain.

De façon surprenante, la demanderesse a constaté qu'un tel revêtement est d'aspect analogue à ceux en chrome. En outre, l'agencement proposé entraîne une simplification du procédé de fabrication et une baisse des coûts. Enfin, la suppression du chrome apporte un avantage environnemental.

Selon d'autres aspects, l'invention propose un dispositif de montage et de blocage en coulissement d'une telle tige, une armature d'appui-tête comprenant au moins une telle tige, un appui-tête de siège de véhicule automobile comprenant une telle armature et un siège de véhicule automobile comprenant au moins une telle tige.

D'autres particularités et avantages de l'invention apparaîtront dans la description qui suit.

On décrit une tige métallique de montage d'un appui-tête sur un dossier de siège de véhicule automobile, ladite tige étant revêtue, au moins en partie, d'une couche de revêtement métallique déposée par électrolyse d'une solution d'étain.

La couche de revêtement métallique peut être constituée d'étain pur ou d'un alliage d'étain, dans lequel l'étain est majoritaire.

Par solution d'étain, on entend une solution comprenant des ions d'étain, et éventuellement d'au moins un autre métal dans le cas où l'on réalise un dépôt d'alliage d'étain.

Selon une réalisation, la couche de revêtement est recouverte d'un vernis protecteur.

On décrit à présent un dispositif de montage et de blocage en coulissement d'une telle tige, ledit dispositif comprenant au moins un cran de blocage disposé sur ladite tige et un tiroir réciproque mobile en translation dans une gaine de réception de ladite tige en coulissement, la surface de contact dudit tiroir avec ledit cran étant en matière plastique, ceci afin d'éviter un éraillement de ladite tige avec le temps.

On décrit à présent une armature d'appui-tête comprenant au moins une telle tige, ladite armature comprenant un tube métallique, notamment conformé en U, ladite tige étant formée par une partie extrême dudit tube.

On décrit à présent un appui-tête de siège de véhicule automobile comprenant un coussin et une telle armature, la tige étant saillante dudit coussin.

On décrit en variante un siège de véhicule automobile, ledit siège comprenant au moins une telle tige, ladite tige étant solidaire de l'armature du dossier et saillante du haut dudit dossier.

## Revendications

1. Tige métallique de montage d'un appui-tête sur un dossier de siège de véhicule automobile, ladite tige étant revêtue, au moins en partie, d'une couche de revêtement métallique déposée par électrolyse d'une solution d'étain.

2. Tige métallique selon la revendication 1, **caractérisée en ce que** la couche de revêtement métallique étant constituée d'étain pur.

3. Tige métallique selon la revendication 1, **caractérisée en ce que** la couche de revêtement métallique étant constituée d'un alliage d'étain, dans lequel l'étain est majoritaire.

4. Tige selon l'une quelconque des revendications 1 à 3, **caractérisée en ce que** la couche de revêtement étant recouverte d'un vernis protecteur.

5. Dispositif de montage et de blocage en coulissement d'une tige selon l'une quelconque des revendications 1 à 4, ledit dispositif comprenant au moins un cran de blocage disposé sur ladite tige et un tiroir réciproque mobile en translation dans une gaine de réception de ladite tige en coulissement, la surface de contact dudit tiroir avec ledit cran étant en matière plastique.

6. Armature d'appui-tête comprenant au moins une tige selon l'une quelconque des revendications 1 à 4, ladite armature comprenant un tube métallique, ladite tige étant formée par une partie extrême dudit tube.

7. Appui-tête de siège de véhicule automobile comprenant un coussin et une armature selon la revendication 6, la tige étant saillante dudit coussin.

8. Siège de véhicule automobile, ledit siège comprenant au moins une tige selon l'une quelconque des revendications 1 à 4, ladite tige étant solidaire de l'armature du dossier et saillante du haut dudit dossier.

## Patentansprüche

1. Metallstift zur Montage einer Kopfstütze auf einer Rückenlehne eines Kraftfahrzeugsitzes, wobei der Stift, mindestens teilweise, mit einer metallischen Beschichtung überzogen ist, die durch Elektrolyse einer Zinnlösung abgelegt ist.

2. Metallstift nach Anspruch 1, **dadurch gekennzeichnet, dass** die metallische Beschichtung aus reinem Zinn besteht.

3. Metallstift nach Anspruch 1, **dadurch gekennzeichnet, dass** die metallische Beschichtung aus einer Zinnlegierung besteht, bei der das Zinn denn größten Teil ausmacht.

4. Metallstift nach einem der Ansprüche 1 bis 3, **dadurch gekennzeichnet, dass** die Beschichtung von einem Schutzlack überzogen ist.

5. Vorrichtung zur Montage und zur Blockierung des Gleitens eines Stifts nach einem der Ansprüche 1 bis 4, wobei die Vorrichtung mindestens eine Blockierungsrast umfasst, die auf dem Stift angeordnet ist, und einen beweglichen reziproken Einschub in Translation in einer Aufnahmehülle des gleitenden Stifts, wobei die Kontaktfläche des Einschubs mit der Rast aus Plastikmaterial ist.

6. Bewehrung der Kopfstütze, umfassend mindestens einen Stift nach einem der Ansprüche 1 bis 4, wobei die Bewehrung ein Metallrohr umfasst, wobei der Stift aus einem Endteil des Rohrs gebildet ist.

7. Kopfstütze eines Kraftfahrzeugsitzes, umfassend ein Kissen und eine Bewehrung nach Anspruch 6, wobei der Stift aus dem Kissen hervorsteht.

8. Kraftfahrzeugsitz, wobei der Sitz mindestens einen Stift nach einem der Ansprüche 1 bis 4 umfasst, wobei der Stift einstückig mit der Bewehrung der Rückenlehne ist und von der oberen Seite der Rückenlehne hervorsteht.

## Claims

1. Metal rod for mounting a head-rest on a motor vehicle seat back section, said rod being coated, at least in part, with a metal coating layer deposited by means of tin solution electrolysis.

2. Metal rod according to claim 1, **characterised in that** the metal coating layer consists of pure tin.

3. Metal rod according to claim 1, **characterised in that** the metal coating layer consists of a tin alloy, wherein tin is the majority constituent.

4. Metal rod according to any of claims 1 to 3, **characterised in that** the coating layer is coated with a protective varnish.

5. Device for mounting and slidably locking a rod according to any of claims 1 to 4, said device comprising at least one locking notch arranged on said shaft and a reciprocal slide valve suitable for translation movement in a sleeve for receiving said sliding rod, the contact surface of said slide valve with said notch being made of plastic.

6. Head-rest frame comprising at least one rod according to any of claims 1 to 4, said frame comprising a metal tube, said rod being formed by an end part of said tube.

7. Motor vehicle seat head-rest comprising a cushion and a frame according to claim 6, the rod projecting from said cushion.

8. Motor vehicle seat, said seat comprising at least one rod according to any of claims 1 to 4, said rod being rigidly connected to the frame of the back section and projecting from the top of said back section.
